# EUROPEAN PATENT APPLICATION

(11) **EP 2 200 369 A2**
(43) Date of publication of application: **23.06.2010**
(21) Application number: 09173369.1
(22) Date of filing: 19.10.2009
(51) Int. Cl.: H04W 36/14

(54) **Method and apparatus for handover between heterogeneous networks**

(30) Priority: 18.12.2008 KR 20080129348
(71) Applicant: Electronics and Telecommunications Research Institute, Daejeon 305-700 (KR)
(72) Inventor: Moon, Jung-mo, Daejeon-si (KR); Lim, Sun-hwa, Daejeon-si (KR); Kim, Jae-ho, Daejeon-si (KR); Yun, Mi-young, Daejeon-si (KR); Lee, Sang-ho, Daejeon-si (KR)
(74) Representative: Betten & Resch

(57) **Abstract**

A method and apparatus for handover between heterogeneous networks is provided. The apparatus collects and manages radio resources from individual radio access networks, and determines and controls handover using the collected radio resources in the course of handover between heterogeneous networks in a multi-wireless interface environment. Accordingly, a seamlessly connected service which is not dependent on a particular radio access network and can minimize Internet protocol (IP) packet loss may be provided.

## Description

### CROSS REFERENCE TO RELATED APPLICATIONS

This application claims the benefit under 35 U.S.C. § 119(a) of Korean Patent Application No. 10-2008-0129348, filed on December 18, 2008, the disclosure of which is incorporated herein in its entirety by reference.

### BACKGROUND

### 1. Field

The following description relates to a handover technology in a multi-radio interface environment in which a plurality of radio access networks overlap, and more particularly, to a method and apparatus for handover between heterogeneous networks, which can provide a seamlessly connected service while minimizing Internet protocol (IP) packet loss.

### 2. Description of the Related Art

In an Internet protocol (IP) based 3^{rd} Generation Partnership Project (3GPP) long term evolution (LTE) (3GPP LTE) network, solutions are required for providing high mobility and preventing user packet loss in vertical handover from a 3GPP network to another non-3GPP network or vertical handover from a non-3GPP network to a 3GPP network.

In 3GPP, techniques for interworking between a 3GGP network and another network are defined in Release 6, and Release 8 specifies techniques using existing general packet radio service (GPRS) tunneling protocol (GTP) in TS23.402 for handover between a 3GPP network and a non-3GPP network and techniques using a proxy mobile IP which is an IP technology for providing mobility of Internet Engineering Task Force (IETF).

In the above techniques, radio access networks for vertical handover with respect to a 3GGP network are classified into reliable radio access networks and non-reliable radio access networks, and different handover techniques are proposed in relation with different radio access techniques for handover between a 3G LTE network and each radio access network.

In addition, although the above described methods introduce optimization methods for vertical handover between reliable access networks in order to improve handover performance, these methods are dependent on a particular radio access network, and thus if handover is performed between the existing network and a new radio access network with a different radio access technique, a new optimized handover method should be specified.

Therefore, the applicant of the present invention has conducted research into a handover technology which can minimize IP packet loss and provide a seamlessly connected service when vertical handover is performed between networks (heterogeneous networks) which employ different radio access techniques.

### SUMMARY

Accordingly, in one aspect, there is provided a method and apparatus for handover between heterogeneous networks, which can minimize Internet protocol (IP) packet loss and provide a seamlessly connected service.

In one general aspect, there is provided an apparatus for handover between heterogeneous networks. The apparatus collects pieces of radio resource information from individual radio access networks, determines a pre-registration time point based on the collected pieces of radio resource information, performs pre-registration on a target network, to which handover is to be performed, at the determined pre-registration time point, and determines whether to perform handover, to release a connection between a user equipment and a source network and to control the user equipment and the target network to connect with each other when the pre-registration on the target network has been performed by the pre-registration processing unit.

Other features will become apparent to those skilled in the art from the following detailed description, which, taken in conjunction with the attached drawings, discloses exemplary embodiments of the invention.

### BRIEF DESCRIPTION OF THE DRAWINGS

FIG. 1 is an illustration showing a multi-wireless interface environment according to an exemplary embodiment.
FIG. 2 illustrates an example of a protocol stack for information exchange between a heterogeneous network handover apparatus and each radio access network according to an exemplary embodiment.
FIG. 3 illustrates an example of a protocol stack for control of handover between a 3GPP network and a non-3GPP network.
FIG. 4 is a block diagram illustrating a heterogeneous network handover apparatus 100 according to an exemplary embodiment.
FIG. 5 is a flowchart illustrating a method of handover between heterogeneous networks according to an exemplary embodiment.
FIG. 6 is a flowchart illustrating an example of handover between a 3GPP network as a source network and a non-3GPP network as a target network.
FIG. 7 is a flowchart illustrating an example of handover between a non-3GPP network as a source network and a 3GPP network as a target network.

Elements, features, and structures are denoted by the same reference numerals throughout the drawings and the detailed description, and the size and proportions of some elements may be exaggerated in the drawings for clarity and convenience.

### DETAILED DESCRIPTION

The following detailed description is provided to assist the reader in gaining a comprehensive understanding of the methods, apparatuses and/or systems described herein. Various changes, modifications, and equivalents of the systems, apparatuses and/or methods described herein will suggest themselves to those of ordinary skill in the art.

In the following description, a detailed description of known functions and configurations incorporated herein will be omitted when it may obscure the subject matter with unnecessary detail.

Before describing the exemplary embodiments, terms used throughout this specification are defined. These terms are defined in consideration of functions according to exemplary embodiments, and can be varied according to a purpose of a user or manager, or a relevant standard and so on. Therefore, definitions of the terms should be made on the basis of the overall context.

A multi-wireless interface environment is an environment in which a plurality of radio access networks overlap.

Pre-registration is a state in which user equipment has performed initial access to a target network to which handover is to be performed and has executed subscriber authentication without completing the handover from a source network currently connected with the user equipment to the target network.

The source network is a radio access network which has been connected to user equipment before handover, and the target network refers to a radio access network which is connected to the user equipment after handover.

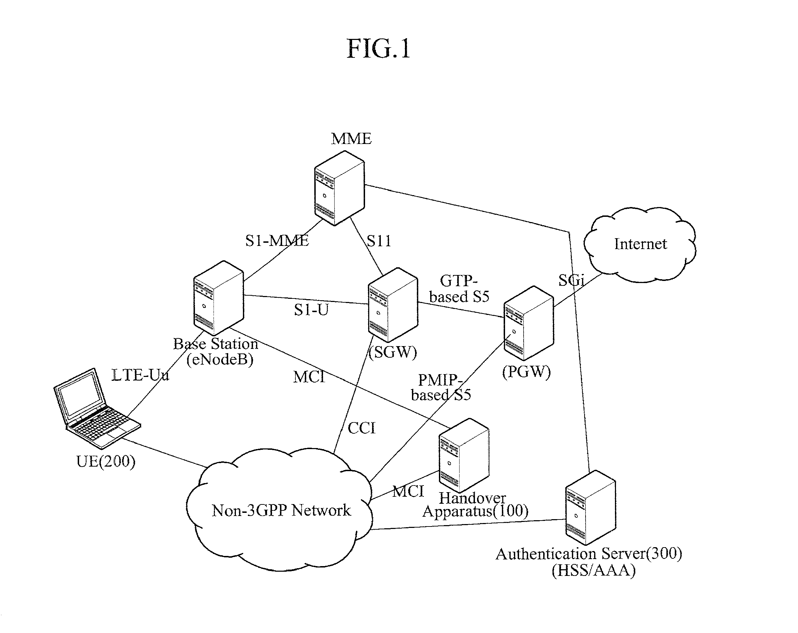

FIG. 1 is an illustration showing a multi-wireless interface environment according to an exemplary embodiment. Referring to FIG. 1, a non-3^{rd} Generation Partnership Project (3GPP) network is connected with a 3^{rd} generation long term evolution (3G LTE)-advanced network which is a 3GPP network to form the multi-wireless interface environment. In FIG. 1, the non-3GPP network functions as a hot spot with respect to the 3G LTE-advanced network.

User equipment (UE) 200 supports dual mode operation which allows access to both the non-3GPP network and the 3GPP network, and provides various packet services through handover between the heterogeneous networks.

A base station (denoted by 'eNodeB' (evolved NodeB) in FIG. 1) manages radio resources and controls a wired/wireless protocol for communication with another node.

A mobility management entity (MME) manages mobility of the UE and controls evolved packet service (EPS) bearer.

A serving gateway (SGW) controls the mobility and wired bearer between the base stations eNodeBs and between the 3GPP networks.

A packet data network (PDN) gateway (PGW) controls the mobility and wired bearer between the 3GPP networks and the non-3GPP networks.

An authentication server (HSS/AAA server) performs authentication of the UE at initial access to each radio access network.

To provide a seamlessly connected service which is not dependent on a particular radio access network and can minimize IP packet loss in the multi wireless interface environment where non-3GPP networks and 3GPP networks are overlapping, a general-purpose handover apparatus 100 for handover between heterogeneous networks is implemented to be connected to each radio access network, collects and manages radio resources from the respective radio access networks and determines and controls the handover based on the collected radio resources.

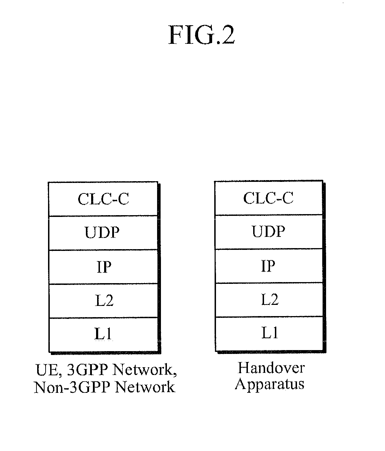

FIG. 2 illustrates an example of a protocol stack for information exchange between a heterogeneous network handover apparatus and each radio access network according to an exemplary embodiment. For convenience of explanation, a protocol used in FIG. 2 will be referred to as a multi-radio resource management common link control interface (MCI).

The MCI includes a common link control (CLC) block which is associated with a radio resource management block (not shown) of an access node of each radio access network and a user equipment, for example, an eNodeB of 3GPP, a base station of a mobile WiMAX, a radio access station (RAS) of WiBro, and an access point (AP) of a wireless LAN. The CLC block collects radio resources from the respective radio access networks, and changes the collected radio resources into arbitrary values usable in the heterogeneous network handover apparatus 100. In addition, the CLC block operates on an UDP/IP for wide use, and transmits the radio resources changed into arbitrary values to the heterogeneous network handover apparatus 100.

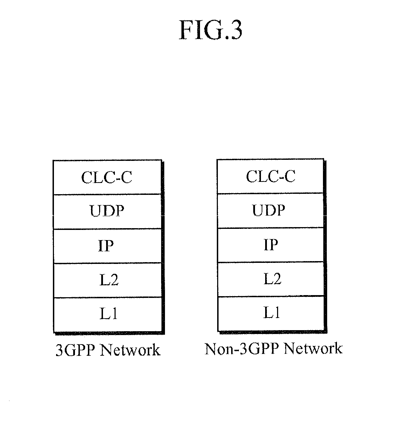

FIG. 3 illustrates an example of protocol stack for control of handover between a 3GPP network and a non'-3GPP network. The protocol will be referred to as CLC-CLC interface (CCI) for convenience of explanation.

When vertical handover is determined based on information regarding collected radio resources, a CLC block transfers pieces of information on a UE to a CLC block of a target network to which handover is to be performed in response to a handover command from a heterogeneous network handover apparatus 100 in FIG. 1. In addition, the CCI operates on user datagram protocol/Internet protocol (UDP/IP) for wide ranging use. The CCI manages forwarding of downstream packets to a UE, for which handover is in progress, in order to prevent data loss during handover.

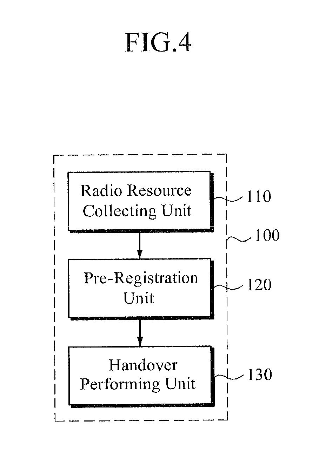

FIG. 4 is a block diagram illustrating a heterogeneous network handover apparatus 100 according to an exemplary embodiment. As shown in FIG. 4, the heterogeneous network handover apparatus 100 includes a radio resource collecting unit 110, a pre-registration unit 120, and a handover performing unit 130.

The radio resource collecting unit 110 collects pieces of radio resource information from individual radio access networks. In this case, the radio resource information may include radio signal intensity information and network preference information.

The radio resource information may be reported from the UE 200 (referring to FIG. 1), a source network, or a target network to the heterogeneous network handover apparatus 100 cyclically or occasionally when a particular event occurs such as network overload.

The UE 200 searches for radio access networks, each belonging to either a 3GPP network or a non-3GPP network which is available in a cell currently connected with the UE 200, and transmits radio resource information containing pieces of preference information regarding a network operator and a subscriber and radio signal intensity information indicating the intensity of radio signal of each radio access network to the heterogeneous network handover apparatus 100 using the protocol as shown in FIG. 2. Thereafter, the heterogeneous network handover apparatus 100 receives and collects the radio resource information through the radio resource collecting unit 110.

The pre-registration processing unit 120 determines a pre-registration time point based on the pieces of radio resource information collected by the radio resource collecting unit 110, and performs pre-registration on the target network, to which handover is to be performed, at the pre-registration time point.

In this case, the pre-registration processing unit 120 may be configured to transmit a pre-registration request message including information on the target network to the UE 200 such that the UE 200 performs an initial access to the target network and processes subscriber authentication.

The pre-registration request message may be transmitted using the protocol as shown in FIG. 2.

For example, if the source network is a 3GPP network and the target network is a non-3GPP network, the UE 200 may perform a layer2 (L2) connection with the non-3GPP network for the initial access, and the authentication server 300 may perform subscriber authentication with respect to the UE 200.

Alternatively, for example, if the source network is a non-3GPP network and the target network is a 3GPP network, the user equipment 200 may be configured to attach to the 3GPP network for the initial access, the authentication server 300 may be configured to perform subscriber authentication with respect to the UE 200, and a data path may be established between the serving gateway (SGW) and the packet data network gateway (PGW: PDN gateway) using GPRS tunneling protocol (GTP).

In this case, the packet data network gateway (PGW) only establishes the data path and does not perform the data path switching in practice. Further description of the pre-registration will be provided in more detail later in conjunction with a description of a method of handover between heterogeneous networks.

The handover performing unit 130 determines whether to perform handover when the pre-registration on the target network has been performed by the pre-registration processing unit and a handover event occurs, releases a connection between a UE and a source network and controls the user equipment and the target network to be connected with each other.

In this case, the handover is performed according to a predetermined decision rule, for example, due to deterioration of a radio environment of the source network because the signal intensity of the source network which is contained in radio resource information drops below a threshold value or due to changes in user's network preference priority.

The handover performing unit 130 does not perform handover and releases the pre-registration when the radio environment of the source network is in a good state.

When it is determined that handover is to be performed, the handover performing unit 130 transmits a handover preparation request message to the source network such that a tunnel is established between the source network and the target network. Through the established tunnel, the target network buffers downstream packets.

When receiving a handover preparation response message from the source network, the handover performing unit 130 transmits a handover command message to the UE 200 such that the UE 200 switches the connection from the source network to the target network.

Accordingly, the general-purpose heterogeneous network handover apparatus which collects and manages radio resources from each radio access network and determines and controls the handover based on the collected radio resources enables handover which is not dependent on a particular radio access network, and can provide a seamlessly connected service while minimizing packet loss by establishing a tunnel for the handover between the source network and the target network.

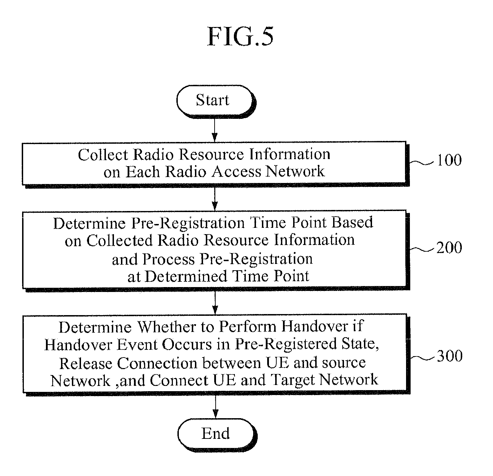

Handover procedures performed by the heterogeneous network handover apparatus will now be described with reference to FIG. 5 in conjunction with FIG. 1. FIG. 5 is a flowchart illustrating a method of handover between heterogeneous networks according to an exemplary embodiment.

The heterogeneous network handover apparatus 100 collects pieces of radio resource information from individual radio access networks (operation 100). The radio resource information may contain information regarding radio signal intensity and network preference information.

The radio resource information may be reported from the UE 200, the source network, or the target network to the heterogeneous network handover apparatus 100 cyclically or occasionally when a particular event occurs such as network overload.

The UE 200 searches for radio access networks, each belonging to either a 3GPP network or a non-3GPP network which is available in a cell currently connected with the UE 200, and transmits radio resource information containing pieces of preference information regarding a network operator and a subscriber and radio signal intensity information indicating the intensity of a radio signal of each radio access network to the heterogeneous network handover apparatus 100 using the protocol as shown in FIG. 2.

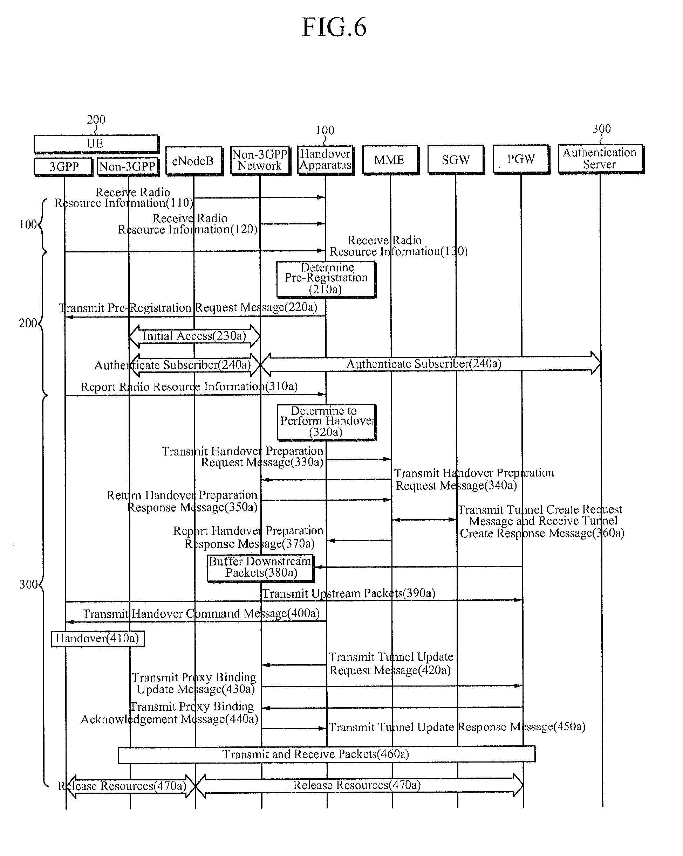

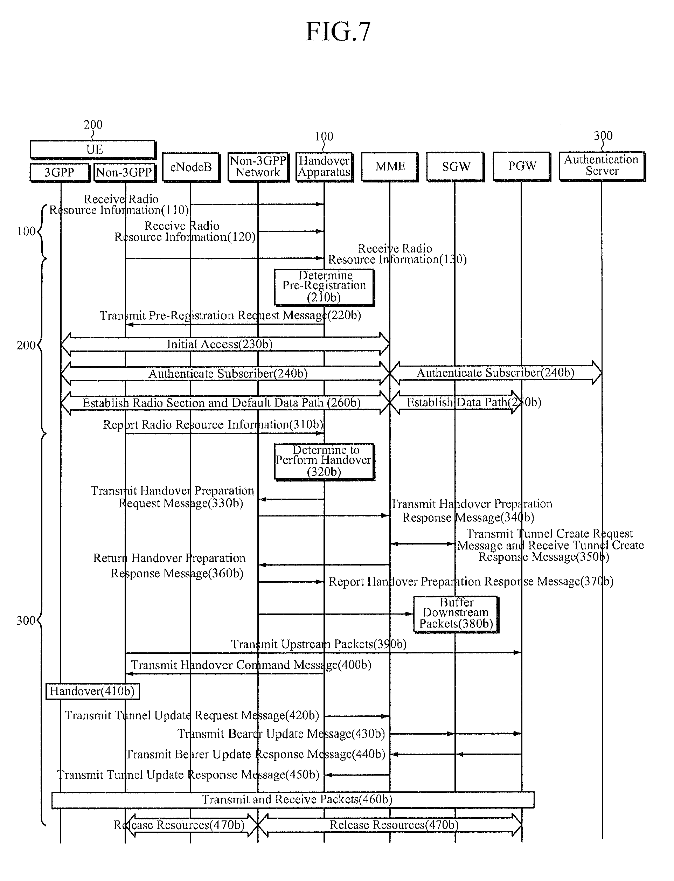

For example, if the source network is a 3GPP network and the target network is a non-3GPP network as shown in FIG. 6, or if the source network is a non-3GPP network and the target network is a 3GPP network as shown in FIG. 7, the heterogeneous network handover apparatus 100 receives radio resource information from a base station eNodeB of the 3GPP network (operation 110), or receives radio resource information from the non-3GPP network (operation 120), or receives radio resource information from the UE 200 (operation 130).

Thereafter, the heterogeneous network handover apparatus 100 determines a pre-registration time point based on the pieces of received radio resource information, and processes pre-registration on the target network, for which handover is to be performed, at the determined pre-registration time point (operation 200).

At this time, the heterogeneous network handover apparatus 100 may be configured to transmit a pre-registration request message including information regarding the target network to the UE 200 such that the UE 200 performs an initial access to the target network and processes subscriber authentication.

The pre-registration request message may be transmitted using the protocol as shown in FIG. 2.

For example, if the source network is a 3GPP network and the target network is a non-3GPP network, the heterogeneous handover apparatus 100 transmits the pre-registration request message to the UE 200 (operation 220a) when the pre-registration is determined to be performed (operation 210a).

Then, the UE 200 may be configured to perform L2 connection with the non-3GPP network for an initial access, and to process subscriber authentication with respect to the UE 200 using the authentication server 300.

For example, as shown in FIG. 7, if the source network is a non-3GPP network and the target network is a 3GPP network, the heterogeneous handover apparatus 100 transmits a pre-registration request message to the UE 200 (operation 220b) when the pre-registration is determined to be performed (operation 210b).

The UE 200 may be configured to attach to the 3GPP network for the initial access (operation 230b), the authentication server 300 may be configured to perform subscriber authentication with respect to the UE 200 (operation 240b), a data path may be established between the serving gateway (SGW) and the packet data network gateway (PGW: PDN gateway) using GPRS tunneling protocol (GTP) (operation 250b), and a radio section and a default data path may be established between the heterogeneous network handover apparatus 100 and the UE 200.

The PGW only establishes the data path, and does not perform the data path switching in practice.

When the pre-registration on the target network has been performed, the heterogeneous network handover apparatus 100 determines whether to perform handover, releases a connection between the UE 200 and the source network and controls the user equipment and the target network to connect with each other (operation 300).

In this case, the handover is performed according to a predetermined decision rule, for example, due to deterioration of a radio environment of the source network because the signal intensity of the source network which is contained in radio resource information drops below a threshold value or due to changes in user's network preference priority.

Meanwhile, in operation 300, the heterogeneous network handover apparatus 100 may not perform handover and release the pre-registration when a radio environment of the source network in a good state.

When it is determined that handover is to be performed, the heterogeneous network handover apparatus 100 transmits a handover preparation request message to the source network such that a tunnel for handover is established between the source network and the target network. The target network buffers downstream packets through the established tunnel.

In addition, when receiving a handover preparation response message from the source network, the heterogeneous network handover apparatus 100 transmits a handover command message to the UE 200 such that the UE 200 can switch the connection from the source network to the target network.

For example, if the source network is a 3GPP network and the target network is a non-3GPP network, when the UE 200 reports radio resource information (operation 310a), the heterogeneous network handover apparatus 100 determines whether to perform handover based on the reported radio resource information (operation 320a), and transmits the handover preparation request message to the MME (operation 330a). The handover preparation request message includes an address of a packet data network gateway (PGW), an address of a service gateway (SGW), and an address of the non-3GPP network.

The MME transmits the handover preparation request message containing information about the UE 200, resource usage information on the UE 200 the address of SGW to the non-3GPP network (operation 340a).

The non-3GPP network which receives the handover preparation request message from the MME checks whether the UE 200 can ensure provision of service quality in the course of handover, and issues a handover preparation response message to the MME (operation 350a).

When receiving the handover preparation response message, the MME transmits a tunnel create request message to the SGW for establishing a forwarding tunnel, and receives a tunnel create response message from the SGW (operation 360a).

Meanwhile, the MME reports the handover preparation response message to the heterogeneous network handover apparatus 100 (operation 370a). At this time, transferred downstream packets are buffered in the non-3GPP network through the established forwarding tunnel (operation 380a), and upstream packets are transferred to an external network through the 3GPP network.

The heterogeneous network handover apparatus 100 transmits a handover command message to the UE 200 (operation 400a), and the UE 200 performs interface switching from the 3GPP network to the non-3GPP network to carry out handover (operation 410a).

The heterogeneous network handover apparatus 100 transmits a tunnel update request message to the non-3GPP network for changing a data path from the PGW to the non-3GPP network (operation 420a).

The non-3GPP network functions as a mobile access gateway (MAG), and transmits a proxy binding update message to the PGW (operation 430a).

The proxy binding update message includes parameters such as a network access identifier (NAI) of a mobile node (MN), lifetime, a type of radio access technology (RAT), a handover indicator, an access point name (APN), and the like.

The PGW functions as a local mobility anchor (LMA), and transmits a proxy binding acknowledgement message to the non-3GPP network (operation 440a).

The proxy binding acknowledgement message contains a network access identifier (NAI) of a mobile node (MN), lifetime, UE address information, and the like.

At this time, the PGW changes a UE traffic transmission path from the SGW to the non-3GPP network. The non-3GPP network transmits the result of changing of the path as a tunnel update response message to the heterogeneous network handover apparatus 100 (operation 450a).

Thereafter, user packets are transmitted and received to/from the UE 200 from/to the PGW via the non-3GPP network (operation 460a). The heterogeneous network handover apparatus 100 receives the message regarding the path change, and then releases all the 3GPP network resources (operation 470a).

In the releasing of resources which have been allocated to the UE 200, if re-registration like in operation 430a has not taken place in another radio access network, the PGW does not immediately release resources associated with IP prefix information allocated to the UE, but maintains the resources for a given period of time and then releases address resources if re-registration of the UE 200 is not performed in the SGW or the non-3GPP network.

Therefore, a drawback which may occur in a break-before-make type handover can be prevented. In detail, in the break-before-make type handover, resource release first takes place in a source network before a path establishment (change) request is issued by a target network to which the handover is performed, and when the released resources are allocated to another UE, the current UE which is connected to the target network cannot use a previous IP address and thus cannot be provided with service continuity.

For example, as shown in FIG. 7, if the source network is a non-3GPP network and the target network is a 3GPP network, radio resource information is reported from the UE 200 (operation 310b), and the heterogeneous network handover apparatus 100 determines whether to perform handover based on the radio resource information (operation 320b), and transmits the handover preparation request message to the non-3GPP network (operation 330b). The handover preparation request message includes an address of the PGW, an address of SGW, and an address of the non-3GPP network.

The non-3GPP network transmits a handover preparation request message including information of the UE 200 and resource usage information of the UE 200 to the MME (operation 340b).

The MME which receives the handover preparation request message checks if the 3GPP network can provide service quality in the course of handover with the UE 200, and if the 3GPP network can provide the service quality with UE, the MME transmits a tunnel create request message to the SGW for establishing a tunnel with the non-3GPP network, and receives a tunnel create response message from the SGW (operation 350b).

Once the tunneling is completed, the MME returns a handover preparation response message to the non-3GPP network (operation 360b).

The non-3GPP network which receives the handover preparation response message establishes a forwarding tunnel, and reports the handover preparation response message to the heterogeneous network handover apparatus 100 (operation 370b).

At this time, transferred downstream packets are buffered in the SGW (operation 380b), and upstream packets are transferred to the external network through the non-3GPP network (operation 390b).

The heterogeneous network handover apparatus 100 transmits a handover command message to the UE 200 (operation 400b), and the UE 200 performs interface switching from the non-3GPP network to the 3GPP network to carry out handover (operation 410b).

The heterogeneous network handover apparatus 100 transmits a tunnel update request message to the MME of the 3GPP network for activating the data path from the PGW to the 3GPP network (operation 420b).

The MME transfers a bearer update request message which is a GPT message to the SGW in order to activate the data path to the 3GPP network, and the SGW transmits the bearer update request message to the PGW (operation 430b).

The PGW transmits a bearer update response message to the SGW, and the SGW transmits the bearer update request message to the MME (operation 440b). In this case, the PGW changes the UE traffic transmission path from the non-3GPP network to the SGW.

The MME transfers the result of changing of the path as the tunnel update response message to the heterogeneous network handover apparatus 100 (operation 450b). Then user packets are transmitted and received to/from the UE from/to the PGW via the 3GPP network (operation 460b).

After receiving the message related to the path change, the heterogeneous network handover apparatus 100 releases all non-3GPP network resources (operation 470b).

In the releasing of resources which have been allocated to the UE 200, if re-registration like in operation 430b or 440b has not taken place in another radio access network, the PGW does not immediately release resources associated with prefix information allocated to the UE, but maintains the resources for a given period of time and then releases address resources if re-registration of the UE 200 is not performed in the SGW or the non-3GPP network.

Therefore, a drawback which may occur in a break-before-make type handover can be prevented. In detail, in the break-before-make type handover, resource release first takes place in a source network before a path establishment (change) request is issued by a target network to which the handover is performed, and when the released resources are allocated to another UE, the current UE which is connected to the target network cannot use a previous IP address and thus cannot be provided with service continuity.

As described above, a general-use handover apparatus which collects and manages radio resources from individual radio access networks, and determines and controls handover based on the collected radio resources can provide handover which is not dependent on a particular radio access network. In addition, the heterogeneous network handover apparatus establishes a tunnel between a source network and a target network, thereby minimizing packet loss and enabling the provision of a continuously connected service.

The described above embodiments are industrially applicable to a handover technology and its applications in a multi radio interface environment in which a plurality of radio access networks overlap.

A number of exemplary embodiments have been described above. Nevertheless, it will be understood that various modifications may be made. For example, suitable results may be achieved if the described techniques are performed in a different order and/or if components in a described system, architecture, device, or circuit are combined in a different manner and/or replaced or supplemented by other components or their equivalents. Accordingly, other implementations are within the scope of the following claims.

## Claims

1. An apparatus for handover between heterogeneous networks, comprising:
a radio resource collecting unit to collect pieces of radio resource information from individual radio access networks;
a pre-registration processing unit to determine a pre-registration time point based on the collected pieces of radio resource information and to perform pre-registration on a target network, to which handover is to be performed, at the determined pre-registration time point; and
a handover performing unit to determine, after the pre-registration on the target network has been performed by the pre-registration processing unit and a handover event occurs, whether to perform handover, to release a connection between a user equipment and a source network when it is determined to perform handover and to control the user equipment and the target network to connect with each other.

2. The apparatus of claim 1, wherein the radio resource information includes information on radio signal intensity and network preference information.

3. The apparatus of claim 1, wherein the pre-registration processing unit transmits a pre-registration request message including information of the target network for the user equipment to gain an initial access to the target network and process subscriber authentication.

4. The apparatus of claim 3, wherein when the source network is a 3^{rd} generation partnership project (3GPP) network and the target network is a non-3GPP network, the user equipment performs layer2 (L2) connection with the non-3GPP network and processes the subscriber authentication through an authentication server.

5. The apparatus of claim 3, wherein when the source network is a non-3GPP network and the target network is a 3GPP network, the user equipment attaches to the 3GPP network and processes subscriber authentication through an authentication server and a data path is established between a serving gateway (SGW) and a packet data network gateway (PGW) based on general packet radio service (GPRS) tunneling protocol (GTP).

6. The apparatus of claim 5, wherein the PGW only establishes a data path, and does not perform data path switching.

7. The apparatus of claim 1, wherein the handover performing unit does not perform handover and releases the pre-registration when a wireless environment of the source network is in a good state.

8. The apparatus of claim 1, wherein the handover performing unit transmits a handover preparation request message to the source network such that a tunnel for handover is established between the source network and the target network when it is determined to perform the handover.

9. The apparatus of claim 8, wherein the target network buffers a downstream packet through the established tunnel.

10. The apparatus of claim 8, wherein the handover performing unit transmits a handover command message to the user equipment such that the user equipment switches the connection from the source network to the target network when the handover performing unit receives a handover preparation response message from the source network.

11. A method of handover between heterogeneous networks, comprising:
collecting, at an apparatus for handover between heterogeneous networks, pieces of radio resource information from individual radio access networks;
determining, at the apparatus for handover, a pre-registration time point based on the collected pieces of radio resource information and processing pre-registration on a target network, to which handover is to be performed, at the determined pre-registration time point; and
after the pre-registration has been processed on the target network and a handover event occurs, determining, at the apparatus for handover, whether to perform handover, when it is determined to perform handover, releasing a connection between the user equipment and the source network and controlling the user equipment and the target network to be connected with each other.

12. The method of claim 11, wherein in the processing of the pre-registration, the apparatus for handover transmits a pre-registration request message including information of the target network for the user equipment to control the user equipment to gain an initial access to the target network and process subscriber authentication.

13. The method of claim 11, wherein when it is determined to perform the handover, if a wireless environment of the source network is in a good state, the handover is not performed and the pre-registration is released.

14. The method of claim 11, wherein when it is determined to perform the handover, a handover preparation request message is transmitted from the apparatus for handover to the source network such that a tunnel for the handover is established between the source network and the target network when it is determined to perform the handover.

15. The method of claim 14, wherein the target network buffers a downstream packet through the established tunnel.
